# EUROPÄISCHE PATENTANMELDUNG

(11) **EP 2 813 476 A1**
(43) Veröffentlichungstag der Anmeldung: **17.12.2014**
(21) Anmeldenummer: 13171938.7
(22) Anmeldetag: 13.06.2013
(51) Int. Cl.: C03B 5/237, F27D 17/00, F28D 21/00

(54) **Einrichtung und Verfahren zur Steigerung der Energiegewinnung an Kraftwärmekopplungsanlagen im Abgasstrom von Glasschmelz- und Leuterprozessen in Querflammenwannen mit Regenerativheizungen**

(71) Anmelder: GET Glass Engineering GmbH, 46539 Dinslaken (DE)
(72) Erfinder: Wenning, Rolf, 46397 Bocholt (DE)
(74) Vertreter: Weissfloh, Ingo

(57) **Zusammenfassung**

Aufgabe der Erfindung ist es daher, ein Verfahren und eine Einrichtung zur Steigerung der Energiegewinnung an Kraftwärmekopplungsanlagen im Abgasstrom von Glasschmelz- und Leuterprozessen in Querflammenwannen mit Regenerativheizungen bei der Flachglasherstellung, insbesondere für die Elektroenergiegewinnung zu schaffen, bei dem ein hohes Maß an Energiegewinnung möglich ist.

Erfindungsgemäß ist mindestens ein Wärmetauscher 3a, 3b mit einem Überhitzer 4 und dieser mit einer Turbine 5 verbunden. Hierbei durchströmen den Wärmetauscher 3a, 3b die Abgase der Abstehwanne 2 und die Abgase der Schmelzwanne 1 als ein gemeinsamer Abgasstrom 6.

Das Verfahren zur Steigerung der Energiegewinnung an Kraftwärmekopplungsanlagen mittels im Abgasstrom 6 von Glasschmelz- und Leuterprozessen in Querflammenwannen 1 mit Regenerativheizungen enthaltenen Wärmetauschersystemen, leitet den gemeinsamen Abgasstrom 6 der Abgase der Abstehwanne 2 und des Abgases der Schmelzwanne 1 durch mindestens einen Wärmetauschers 3a, 3b. Das im Wärmetauschprozess erwärmte Medium wird mindestens einem Überhitzer 4 und wird überhitzt mindestens einer Turbine 5 zugeführt, welches diese mindestens eine Turbine 5 antreibend passiert.

Das Anwendungsgebiet der Erfindung ist die Energiegewinnung bei der Glasherstellung.

## Beschreibung

Einrichtung und Verfahren zur Steigerung der Energiegewinnung an Kraftwärmekopplungsanlagen im Abgasstrom von Glasschmelz- und Leuterprozessen in Querflammenwannen mit Regenerativheizungen bei der Flachglasherstellung, insbesondere für die Elektroenergiegewinnung.

Bei den bisher bei der Flachglasherstellung in Querflammenwannen mit Regenerativheizungen eingesetzten Verfahren und Einrichtungen zur Nutzung der Abwärme des Abgases der Querflammenwanne oder Schmelzwanne in Kraftwärmekopplungsanlagen werden die Abgase durch Wärmetauscher geleitet, welche mit einer Turbine verbunden sind. Eine zusätzliche Erwärmung der Abgase erfolgt bislang nicht oder nur mit der Abluft der Abstehwanne. Hierbei wird die gesamte Abluft der Abstehwanne zur Dampfüberhitzung eingesetzt, wobei die Abgase der Abstehwanne über einen Überhitzer geleitet werden. Jedoch reicht die Abwärme der Abstehwanne nur unzureichend und nur unzuverlässig zur Dampfüberhitzung aus.

Als nächstliegender Stand der Technik wird die DE 35 03 103 A1 genannt. Hier werden eine Vorrichtung und ein Verfahren zur Rückgewinnung eines Teils der Abwärme beschrieben, die in einem industriellen Hochtemperaturprozess erzeugt wird. Ein solcher Arbeitsprozess ist beispielsweise das Glasschmelzen, beidem der Schmelzofen mindestens zwei Regeneratoren aufweist, die abwechselnd zum Vorwärmen der Verbrennungsluft benutzt werden und zur Speicherung der heißen Abwärme dienen. Die heißen Abgase des Arbeitsprozesses werden durch einen Wärmeübertrager geschickt, wo die Wärme auf die saubere, auf 100 psi verdichtete Luft vom Verdichter einer nach dem Brayton-Prozess arbeitenden Energiewiedergewinnungsanlage übertragen wird, wobei die heiße verdichtete Luft in einer Hochleistungsturbine expandiert wird. Die Abgase der Turbine haben atmosphärischen Druck und eine Temperatur zwischen 750 Grad Fahrenheit und 900 Grad Fahrenheit. Diese Turbinenabgase werden dem gegenüberliegenden Regenerator als saubere vorgewärmte Verbrennungsluft zugeführt.

Aufgabe der Erfindung ist es daher, ein Verfahren und eine Einrichtung zur Steigerung der Energiegewinnung an Kraftwärmekopplungsanlage im Abgasstrom von Glasschmelz- und Leuterprozessen in Querflammenwannen mit Regenerativheizungen bei der Flachglasherstellung, insbesondere für die Elektroenergiegewinnung zu schaffen, bei dem ein hohes Maß an Energiegewinnung möglich ist.

Mit der Erfindung wird im angegebenen Anwendungsfall erreicht, dass ein Verfahren und eine Einrichtung zur Steigerung der Energiegewinnung an Kraftwärmekopplungsanlagen im Abgasstrom von Glasschmelz- und Leuterprozessen in Querflammenwannen mit Regenerativheizungen bei der Flachglasherstellung geschaffen wird, wobei der Abgasstrom der Abgase der Schmelzwanne Wärmetauscher durchströmt und ein Medium erwärmt. Das erwärmte Medium wird einem Überhitzer zugeführt und dort weiter erhitzt und als weiter erhitztes Medium einer Turbine zugeführt. Durch die Wärmetauscher werden die durch den Herstellungsprozess der Glasherstellung entstehenden Abgasströme aus der Schmelzwanne einer weiteren Nutzung zugeführt. Das durch den Überhitzer überhitzte Medium ist nun in der Lage die Turbine noch wirtschaftlicher anzutreiben. Der Einsatz einer zweistufigen Turbine wird ermöglicht. Die elektrische Leistung am Generator kann fast verdoppelt werden. Die Energieeffizienz der Anlage wird somit verbessert.

Vorteilhafte Ausgestaltungen des Verfahrens sind in den Ansprüchen 2 bis 7 und der Einrichtung im Anspruch 8 als Nebenanspruch und deren vorteilhafte Ausgestaltungen in den Ansprüchen 9 bis 13 dargestellt.

Mit der Weiterbildung nach Anspruch 2 wird der Abgasstrom der Abgase der Schmelzwanne durch die Abwärme der Abstehwanne zu einem gemeinsamen Abgasstrom erweitert. Hierdurch wird das Energiepotential dieser Abwärme ebenfalls zur Energierückgewinnung genutzt. Es wird nahezu die gesamte durch den Herstellungsprozess der Flachglasherstellung entstehende Abwärme durch die Wärmetauscher einer weiteren Nutzung zugeführt. Zusätzlich werden die Bedingungen in der Umgebung der Anlage und des Prozesses verbessert.

Nach Anspruch 3 wird der Abgasstrom durch mindestens einen Wärmetauscher vor dem Abgasreinigungssystem und durch mindestens einen Wärmetauscher nach dem Abgasreinigungssystem geleitet. Hierdurch wird dem Abgasstrom die jeweils maximal mögliche Energie entzogen und die Temperatur des Abgasstromes gesenkt, wobei berücksichtigt wird, dass die für eine zuverlässige Entgiftung bzw. Reinigung notwendigen Temperaturen eingehalten werden. Da sich die Temperatur des Abgasstromes in dem Abgasreinigungssystem nur minimal verringert, ist ein zusätzlicher Wärmetauscher nach dem Abgasreinigungssystem sinnvoll. Indem der Abgasstrom durch einen Wärmetauscher nach dem Abgasreinigungssystem geleitet wird, kann noch weitere Energie dem Abgasstrom entzogen werden und somit die Temperatur des Abgases, welches in die Atmosphäre geleitet wird, reduziert werden.

Bei der Weiterbildung nach Anspruch 4 erfolgt zusätzlich eine Kopplung der jeweiligen Wärmetauscher vor und nach dem Abgasreinigungssystem und der durch die jeweiligen Wärmetauscher erwärmten Medien. Hierdurch wird das schon durch den Wärmetauscher nach dem Abgasreinigungssystem erwärmte Medium in dem Wärmetauscher vor dem Abgasreinigungssystem noch weiter erhitzt. Es wird erreicht, dass die Abgastemperatur am Ausgang des Wärmetauschers vor dem Abgasreinigungssystem nicht unter die notendigen Temperaturen für die Abgasreinigung sinkt.

Indem nach Anspruch 5 das nach dem Durchlauf durch die Turbine kondensierte Medium bzw. das aus einem Reservoirbehälter für den Wärmetauschprozess in Umlauf gebrachte Medium eine im Abgasstrom befindlichen weiteren zusätzlichen Wärmetauscher durchläuft, wird das Medium auf eine für eine Entgasung notwendige Temperatur erhitzt und zusätzlich wird dem Abgas weitere Energie entzogen. Das weiter abgekühlte Abgas lässt sich nun über Kunststoffkamine abführen und das entstehende Kondensat ohne Beeinträchtigung des Kamins auffangen.
Nach Anspruch 6 wird der Überhitzer mit fossilen Brennstoffen befeuert. Wenngleich durch das Verbrennen von fossilen Brennstoffen im Überhitzer zusätzlich Ressourcen verbraucht werden, so wird dadurch erreicht, dass dem Medium in dem Maße Energie zugeführt wird, dass dadurch die nachgeschaltete Turbine optimal angetrieben werden kann und durch die Erzeugung von Elektroenergie die zusätzlichen Kosten für die Befeuerung des Überhitzers mehrfach ausgeglichen werden. Zusätzlich werden gegebenenfalls auftretende produktionsbedingte Temperaturschwankungen der Abgase ausgeglichen, da der Überhitzer permanent mit einem fossilen Brennstoff befeuert wird.

Das Verfahren wird nach Anspruch 7 weiter verbessert, indem die Abwärme aus der Abstehwanne auch dem Überhitzer zugeführt wird. Somit besteht die Möglichkeit, den Herstellungsprozess bei wechselnden Lasten besser zu steuern, da die Abwärme dem Überhitzungsprozess und dem Abgasstrom zugeführt wird. Mit dem Einleiten der Abwärme lässt sich die Zufuhr fossiler Brennstoffe reduzieren.

Bei der Einrichtung nach Nebenanspruch 8 sind im Abgaskanal Wärmetauscher angeordnet und mit einem Überhitzer verbunden. Der Überhitzer ist mit einer Turbine verbunden. Die den Abgaskanal durchströmenden Abgase sind die zusammengeführten Abgase der Querflammenbefeuerung, der Schmelzwannen und der Abwärme der Abstehwanne. Hierdurch wird erreicht, dass die Wärmetauscher alle vorhandenen Prozessabgase durchströmen. Somit wird erreicht, dass aus der Abgaswärme der maximale Nutzen gezogen werden kann. Durch das Zusammenführen der Abgase wird ein kontinuierlicher Abgasstrom erreicht, welcher einen kontinuierlichen Wärmetausch ermöglicht.

Nach Anspruch 9 ist ein Bypass vom Kamin der Abstehwanne zum Abgaskanal der Schmelzwanne sowie zum Überhitzer vorgesehen. Hierdurch ist es möglich, die Abwärme der Abstehwanne in den Abgaskanal zur Bildung eines gemeinsamen Abgasstroms für eine noch effizientere Energierückgewinnung zusammenzuführen. Weiterhin ist es in Abhängigkeit der Auslastung somit möglich, die Abwärme der Abstehwanne direkt dem Überhitzer zuzuführen.

Bei der Einrichtung nach Anspruch 10 sind Wärmetauscher vor und nach dem Abgasreinigungssystem vorgesehen. Hierdurch wird dem Abgas über die jeweiligen Wärmetauscher die größtmögliche Menge Energie entzogen. Da sich die Abgastemperatur bei der Abgasreinigung nur kaum verringert, besitzt das Abgas auch nach der Abgasreinigung noch eine so hohe Temperatur, sodass auch nach der Abgasreinigung mindestens ein weiterer Wärmetauscher sinnvoll angeordnet ist.

Mit der Weiterbildung nach Anspruch 11 sind die Wärmetauscher vor und nach der Abgasreinigung so miteinander gekoppelt, dass das erwärmte Medium des nach der Abgasreinigung angeordneten Wärmtauschers dem vor der Abgasreinigung angeordneten Wärmetauscher zugeführt wird. Hierdurch wird der Wärmetauschvorgang hinsichtlich der Abgasausgangstemperaturen am vor der Abgasreinigung angeordneten Wärmetauscher und der Temperatur des Mediums verbessert.

Zur Steigerung zur Energierückgewinnung ist nach Anspruch 12 im Abgasstrom ein weiterer nachgelagerter Wärmetauscher vorhanden. Der Wärmtauscher ist mit einem Reservoirbehälter des Wärmetauschmediums bzw. mit einem Kondensator nach der Turbine verbunden. Mit diesem Wärmetauscher ist es möglich, die Wasseraufbereitung für den Kraftwärmekopplungsprozess nahezu vollständig mittels der restlichen Abwärme im Abgasstrom zu betreiben. Mit Hilfe des Wärmetauschers reduziert sich die Abgastemperatur soweit, dass das Abgas in Kamine mit einer geringen thermischen und hohen chemischen Beständigkeit eingeleitet werden können. Mit diesem Wärmetauscher erhöht sich weiterhin die Effizienz der gesamten Anlage der Energierückgewinnung.

Die Weiterbildung nach Anspruch 13 betrifft den Überhitzer. Der Überhitzer besitzt eine fossile Wärmequelle. Hierdurch besteht die Möglichkeit, dass das von den Wärmetauschern erwärmte Medium mit einem vergleichsweise geringen materiellen wie finanziellen Aufwand weiter erhitzt wird, wodurch die nachgeschaltete Turbine noch effizienter arbeitet.

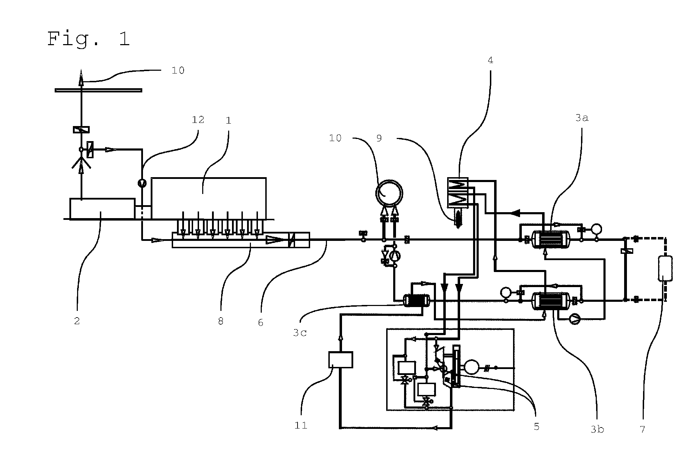

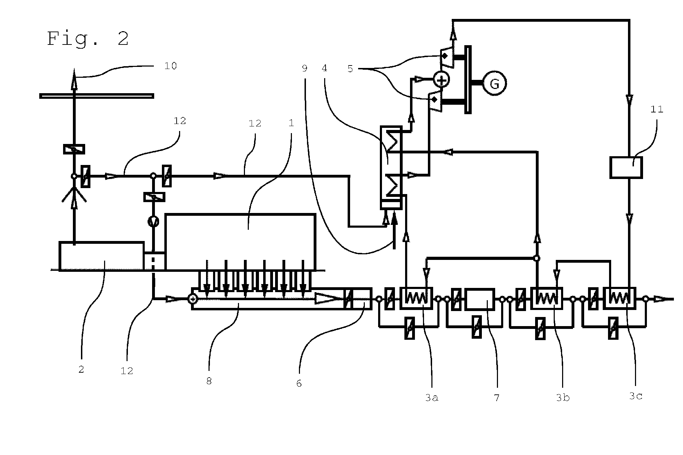

Ein Ausführungsbeispiel der Erfindung ist in den Zeichnungen dargestellt und wird im Folgenden näher beschrieben. Die zwei Figuren zeigen jeweils ein Verfahrensfließbild der erfindungsgemäßen Lösung, wobei Fig. 1 das Kraftwärmekopplungssystem ohne Nutzung der Abwärme der Abstehwanne zum Betreiben des Überhitzers zeigt und in Fig. 2 das Kraftwärmekopplungssystem mit Nutzung der Abwärme der Abstehwanne zum Betreiben des Überhitzers gezeigt wird.

Das erfindungsgemäße Verfahren sieht vor, dass im Abgaskanal 8 die Abwärme der Abstehwanne 2 und die Abgase der Schmelzwanne 1 zusammengefasst als ein gemeinsamer Abgasstrom 6 durch einen Wärmetauscher 3a geleitet werden. Um die Abwärme der Abstehwanne 2 in den Abgaskanal 8 der Schmelzwanne 1 zu leiten, ist ein Abwärme-Bypass 12 vorhanden, welcher vom Kamin 10 der Abstehwanne 2 in den Abgaskanal 8 der Schmelzwanne 1 geführt ist. Der Abgasstrom 6 durchläuft das Abgasreinigungssystem 7, um danach einen weiteren Wärmetauscher 3b zu durchlaufen. Der Wärmetauscher 3a befindet sich vor dem Abgasreinigungssystem 7 und der Wärmetauscher 3b befindet sich nach dem Abgasreinigungssystem 7. Die Wärmetauscher 3a, 3b sind mit einem Überhitzer 4 gekoppelt. Das von den Wärmetauschern 3a, 3b erwärmte Medium wird jeweils zum Überhitzer 4 und von dort aus als weiter erhitztes Medium der Turbine 5 zugeführt und treibt diese an.
Es ist weiterhin vorgesehen, dass der Wärmetauscher 3b mit dem Wärmetauscher 3a gekoppelt ist. Hierbei wird das erwärmte Medium des Wärmetauscher 3b dem Wärmetauscher 3a zugeführt und von diesem aus zum Überhitzer 4 geleitet. Der Überhitzer 4 wird mit Erdgas befeuert. Als Wärmetauscher 3a, 3b kommen Rauchrohrkessel zum Einsatz.

Aus einem Reservoir-Behälter 11 wird Wasser dem Wärmetauscher 3c zugeführt, welcher eine Entgasung des Wassers ermöglicht. Das Wasser erfährt hierbei einen Phasenwechsel zu Dampf. Dieser Dampf gelangt weiter in den Wärmetauscher 3b. Der Dampf wird zum Einen dem Überhitzer 4 und zum Anderen dem Wärmetauscher 3a zugeführt und wird weiter erhitzt. Vom Wärmetauscher 3a wird der Dampf ebenfalls zum Überhitzer 4 geleitet Im Überhitzer 4 wird der Dampf aus den Wärmetauscher 3a, 3b mittels Erdgas weiter erhitzt, um danach die Turbine 5 als zweistufige Turbine 5 anzutreiben. Der überhitzte Dampfstrom des Wärmetauschers 3a wird der ersten Stufe der Turbine 5 und der überhitzte Dampfstrom des Wärmetauschers 3b wird erst mit an der zweiten Stufe der Turbine 5 kumuliert zugeführt.

Es ist jedoch auch denkbar, dass der Wärmetauscher 3c unmittelbar nach einem Kondensator nach der Turbine angeordnet ist, um schon dort die Entgasung des kondensierten Wasser durchzuführen.

Zur weiteren Nutzung der Abwärme der Abstehwanne 2 ist der Abwärme-Bypass 12 zusätzlich zum Überhitzer 4 geführt. Durch das Einspeisen der Abwärme in den Überhitzungsprozess wird die Befeuerung des Überhitzers 4 mit fossilen Brennstoffen, wie Erdgas, unterstützt, wodurch sich eine Einsparung an dieser Erdgasbefeuerung ergibt.

Das Ausführungsbeispiel soll den Temperaturverlauf des Abgases und des Mediums verdeutlichen. Der 520 Grad Celsius heiße Abgasstrom 6 durchströmt den Wärmetauscher 3a und verlässt diesen mit einer Temperatur von 360 Grad Celsius.
Diese Temperatur ist für die Funktion des
Abgasreinigungssystems 7 notwendig. Während der Abgasreinigung reduziert sich die Temperatur des Abgasstroms auf 340 Grad Celsius. Das nach dem Abgasreinigungssystem 7 340 Grad Celsius heiße Abgas durchläuft den Wärmetauscher 3b und verlässt ihn mit 180 Grad Celsius und wird zum Kamin 10 und anschließend in die Atmosphäre geleitet. Im Wärmetauscher 3b wird während des Wärmetauschvorgangs das eingeleitete Wasser auf 144 Grad Celsius zu Wasserdampf erhitzt und wird sowohl dem Überhitzer 4 als auch dem Wärmetauscher 3a zugeführt. Dieser Wasserdampf wird im Überhitzer 4 auf 180 Grad Celsius erhitzt. Der zu erwärmende den Wärmetauscher 3a durchströmende Wasserdampf aus dem Wärmetauscher 3b wird mit 144 Grad Celsius eingekoppelt und verlässt mit 253 Grad Celsius den Wärmtauscher 3a und wird dem Überhitzer 4 zugeführt und dort auf 420 Grad Celsius weiter erhitzt.
Die überhitzten Wasserdämpfe werden einer zweistufigen Turbine 5 zugeführt. Hierbei wird der 420 Grad Celsius heiße Wasserdampf der ersten Stufe der Turbine 5 zugeführt und der 180 Grad Celsius heiße Dampf zusätzlich an der zweiten Stufe der Turbine 5 eingekoppelt. Der Dampf kondensiert und gelangt zu Wasser kondensiert zurück in den Reservoir-Behälter 11.

Zur Senkung der Abgastemperatur auf etwa 50 bis 70 Grad Celsius, wird der Abgasstrom 6 durch einen weiteren Wärmetauscher 3c geleitet. In diesem Wärmtauscher 3c wird aus dem Reservoir-Behälter 11 das Wasser zum Entgasen zugeführt und zu Dampf auf etwa 104 Grad Celsius erhitzt. Der Dampf wird dann aus dem Wärmetauscher 3c in den Wärmetauscher 3b geleitet und durchläuft den Wärmetauscher 3a sowie den Überhitzer 4 und die Turbine 5.

### Zusammenstellung der Bezugszeichen

- 1: - Querflammenwanne, Schmelzwanne
- 2: - Abstehwanne
- 3a, 3b, 3c: - Wärmetauscher
- 4: - Überhitzer
- 5: - Turbine
- 6: - Abgasstrom
- 7: - Abgasreinigungssystem
- 8: - Abgaskanal
- 9: - Wärmequelle
- 10: - Kamin
- 11: - Reservoir-Behälter
- 12: - Abwärme-Bypass

## Patentansprüche

1. Verfahren zur Steigerung der Energierückgewinnung zur Nutzung an Kraftwärmekopplungsanlagen mittels im Abgasstrom (6) von Glasschmelzprozessen in Querflammenwannen (1) mit Regenerativheizungen enthaltenen Wärmetauschersystemen,
**dadurch gekennzeichnet ,**
**dass** das durch den Abgasstrom (6) der Abgase der Schmelzwanne (1) durch mindestens einen Wärmetauscher (3a, 3b) im Wärmetauschprozess erwärmte Medium mindestens einem Überhitzer (4) zugeführt wird und diesen mindestens einen Überhitzer (4) durchströmt und das überhitzte Medium an mindestens eine Turbine (5) geleitet wird und diese mindestens eine Turbine (5) antreibt.

2. Verfahren nach Anspruch 1,
**dadurch gekennzeichnet,**
**dass** der Abgasstrom (6) aus dem gemeinsamen Abgasstrom (6) der Abwärme der Abstehwanne (2) und des Abgases der Schmelzwanne (1) gebildet wird.

3. Verfahren nach Anspruch 1,
**dadurch gekennzeichnet,**
**dass** der Abgasstrom (6) durch mindestens einen Wärmetauscher (3a) vor einem Abgasreinigungssystem (7) und durch mindestens einen Wärmetauscher (3b) nach dem Abgasreinigungssystem (7) geleitet wird.

4. Verfahren nach einem der vorhergehenden Ansprüche,
**dadurch gekennzeichnet,**
**dass** das im Wärmetauschprozess erwärmte Medium des Wärmetauschers (3b) nach dem Abgasreinigungssystem (7) durch den mindestens einen Wärmetauscher (3a) vor dem Abgasreinigungssystem (7) geleitet wird, wobei das Medium im Wärmetauschprozess des mindestens einen Wärmetauschers (3a) vor dem Abgasreinigungssystem (7) weiter erwärmt wird.

5. Verfahren nach einem der vorhergehenden Ansprüche,
**dadurch gekennzeichnet,**
**dass** das nach dem Durchlauf durch die Turbine (5) kondensierte Medium und/oder das aus einem Reservoirbehälter (11) für den Wärmetauschprozess in Umlauf gebrachte Medium durch einen im Abgasstrom (6) nach dem Wärmetauscher (3b) vorhandenen Wärmetauscher (3c) geleitet wird, wobei das Medium am Ausgang des Wärmetauschers (3c) in den Wärmetauscher (3b) geleitet wird.

6. Verfahren nach einem der vorhergehenden Ansprüche,
**dadurch gekennzeichnet,**
**dass** der Überhitzer (4) mit einem fossilen Brennstoff befeuert oder mittels der Abwärme der Abstehwanne (2) beheizt wird.

7. Verfahren nach einem der vorhergehenden Ansprüche,
**dadurch gekennzeichnet,**
**dass** der Überhitzer (4) mittels der Abwärme der Abstehwanne (2) zusätzlich beheizt wird.

8. Einrichtung zur Durchführung des Verfahrens zur Steigerung der Energiegewinnung an Kraftwärmekopplungsanlagen mittels im Abgasstrom (6) von Glasschmelzprozessen in Querflammenwannen mit Regenerativheizungen enthaltenen Wärmetauschersystemen,
**dadurch gekennzeichnet ,**
**dass** mindestens ein im Abgaskanal (8) angeordneter Wärmetauscher (3a, 3b) mit mindestens einem Überhitzer (4) verbunden ist und der mindestens eine Überhitzer (4) mit mindestens einer Turbine (5) verbunden ist.

9. Einrichtung nach Anspruch 8,
**dadurch gekennzeichnet,**
**dass** ein Bypass (12) vom Kamin (10) der Abstehwanne (2) in den Abgaskanal (8) der Schmelzwanne (1) und/oder zum Überhitzer (4) vorhanden ist, wobei im Abgaskanal (8) die Abwärme der Abstehwanne (2) und das Abgas der Schmelzwanne (1) zu einem gemeinsamen Abgasstrom (6) zusammengefasst sind.

10. Einrichtung nach den Ansprüchen 8 und 9,
**dadurch gekennzeichnet,**
**dass** im Abgasstrom (6) mindestens ein Wärmetauscher (3a) vor und/oder ein Wärmetauscher (3b) nach einem Abgasreinigungssystem (7) angeordnet ist.

11. Einrichtung nach den Ansprüchen 8 bis 10,
**dadurch gekennzeichnet,**
**dass** der mindestens eine Wärmetauscher (3b) nach dem Abgasreinigungssystem (7) mit dem mindestens einen Wärmetauscher (3a) vor dem Abgasreinigungssystem (7) verbunden ist.

12. Einrichtung nach den Ansprüchen 8 bis 11,
**dadurch gekennzeichnet,**
**dass** im Abgasstrom (6) nach dem mindestens einen Wärmetauscher (3b) mindestens ein Wärmetauscher (3c) angeordnet ist, wobei der Eingang des Wärmetauschers (3c) mit einem Reservoir-Behälter (11) des Wärmetauschmediums und/oder mit einem Kondensator nach der Turbine (5) und der Ausgang des Wärmetauschers (3b) mit dem Wärmetauscher (3b) verbunden ist.

13. Einrichtung nach den Ansprüchen 8 bis 12,
**dadurch gekennzeichnet,**
**dass** der Überhitzer (4) eine Wärmequelle (9) für fossile Brennstoffe besitzt.
